Europäisches Patentamt

European Patent Office

Office européen des brevets

(19)

(11) **EP 0 538 633 B1**

(12) **EUROPÄISCHE PATENTSCHRIFT**

(45) Veröffentlichungstag und Bekanntmachung des
Hinweises auf die Patenterteilung:
**22.01.1997 Patentblatt 1997/04**

(51) Int Cl.$^6$: **G02B 6/30**

(21) Anmeldenummer: **92116229.3**

(22) Anmeldetag: **23.09.1992**

(54) **Kopplung zwischen optischer Faser und integriertem optischen Wellenleiter sowie Herstellungsverfahren**

Connection between optical fibre and integrated optical waveguide and manufacturing process

Connexion entre une fibre optique et un guide d'onde optique intégré et procédé de fabrication

(84) Benannte Vertragsstaaten:
**DE ES FR GB IT SE**

(30) Priorität: **23.10.1991 DE 4134940**

(43) Veröffentlichungstag der Anmeldung:
**28.04.1993 Patentblatt 1993/17**

(73) Patentinhaber: **ROBERT BOSCH GMBH
70442 Stuttgart (DE)**

(72) Erfinder: **Mueller-Fiedler, Roland, Dr. Dipl.-Phys.
W-7250 Leonberg 7 (DE)**

(56) Entgegenhaltungen:
**EP-A- 0 331 332     EP-A- 0 360 176
EP-A- 0 420 028     WO-A-91/13378
GB-A- 2 239 102**

**Beschreibung**

Stand der Technik

Die Erfindung betrifft ein integriertes optisches Bauelement, insbesondere einen Modulator, Richtkoppler, Schalter, Polarisator, Verteiler u.dgl., nach der Gattung des Hauptanspruchs sowie ein Verfahren zu seiner Herstellung.

Derartige Bauelemente spielen in der optischen Nachrichtentechnik eine wichtige Rolle. Beispielsweise werden zur berührungsfreien Abstandsmessung zunehmend optische Sensoren eingesetzt, deren Meßprinzip auf integriert-optischen Interferometern beruht. Derartige Bauelemente müssen zur Weiterleitung oder Zuführung von Signalen an Glasfasern angekoppelt werden (Faser-Chip-Kopplung). Der Licht-Einkoppelwirkungsgrad bei der Kopplung von Glasfasern und integrierten Wellenleitern der Bauelemente hängt sehr stark von dem Abstand der Endflächen, einer lateralen Verschiebung sowie einer Winkelverkippung der optischen Achsen gegeneinander ab. Die Glasfaser besitzt bei der Ankopplung demnach fünf Freiheitsgrade, die unabhängig voneinander optimiert werden müssen: einen axialen Freiheitsgrad, zwei laterale Freiheitsgrade und zwei Winkelfreiheitsgrade. Bei den für Glasfasern typischen Feldverteilungen führt z. B. ein lateraler Versatz von nur 1 µm bereits zu einem Koppelverlust von etwa 0,3 dB.

Ein effizientes Ankoppelverfahren erfordert eine Reduktion der Freiheitsgrade sowie eine Möglichkeit der gleichzeitigen Positionierung aller Fasern eines Bündels. Aus Appl. Opt. 17 (1978), 895, "Optical coupling from fibres to channel waveguides formed on silicon", J. T. Boyd und S Sriram, ist es bakannt, V-Nuten als Positioniergräben für die Glasfasern in ein Siliziumsubstrat einzuätzen. Die anisotrop geätzten V-Nuten werden allseitig von langsam ätzenden {111}-Ebenen begrenzt, die einen Winkel von 54,7° zur Waver-Oberfläche einschließen. Fluchtend mit diesen V-Nuten sind die integrierten Wellenleiter angeordnet, wobei die Breite der Nuten so optimiert werden kann, daß durch die sich ergebende Nutform der Faserkern in der gleichen horizontalen Ebene wie der Lichtwellenleiter zu liegen kommt. Die im Bereich der Kopplungsfläche zum Lichtwellenleiter liegende Stirnfläche der V-Nut ist ebenfalls unter einem Winkel von 54,7° geneigten Endfläche zu versehen, um damit den Faserkern bis auf Stoßkopplung an den integrierten Lichtwellenleiter heranzuschieben. Dieses Verfahren hat jedoch den Nachteil, daß eine aufwendige Endflächenbearbeitung der Faser notwendig ist und die Faser nur in einer bestimmten Lage in die Nut eingelegt werden darf. Bei der Kopplung besteht darüber hinaus die Gefahr, daß die beiden Endflächen aufeinandergleiten und zumindest der Endbereich der Faser daher aus der Nut herausgeschoben wird. Eine zusätzliche Schwierigkeit ergibt sich aus der Notwendigkeit nicht nur die Faser, sondern auch den integrierten Wellenleiter mit einer entsprechend geneigten Endfläche zu versehen.

Eine Technik, welche die mit einer geneigten Positioniergrabenendfläche verbundenen Nachteile vermeidet, ist aus der EP-A 331 332 bekannt. Danach wird eine Siliciumsubstrat, worauf sich ein Lichtwellenleiter befindet, in dessen Endbereich unter Belassung einer über den Positioniergraben vorspringenden, freischwebenden Zunge unterätzt. Eine Glasfaser kann dadurch so an das auf der Zunge befindliche Lichtwellenleiterende herangeführt werden, daß die Koppelfläche zwischen beiden senkrecht zur Lichtleitrichtung steht. Die Struktur besitzt allerdings den nachteil, daß die freischwebende Zunge mit dem Lichtwellenleiter sehr dünn und als Folge davon zerbrechlich ist. Das Positionieren der Glasfaser muß deshalb mit äußerster Vorsicht erfolgen. Aus demselben Grund ist die Anordnung ferner für Anwendungen in rauhen Umgebungsbedingungen nicht geeignet.

Vorteile der Erfindung

Das erfindungsgemäße integriert-optische Bauelement mit den kennzeichnenden Merkmalen des Hauptanspruchs hat den Vorteil, daß keine aufwendige Bearbeitung der Faserendfläche notwendig ist und die Faser auf einfache Weise in der V-Nut an den Wellenleiter herangeschoben werden kann. Dabei erfolgt eine selbstjustierende Stoßkopplung zwischen Glasfaser und Wellenleiter. Es liegt eine hohe Genauigkeit der relativen Lage der Faser- und Wellenleiter-Endflächen und damit ein hoher Koppelwirkungsgrad vor. Dabei können die Haltenuten in einfacher Weise mikromechanisch hergestellt werden, wobei eine hohe Reproduzierbarkeit der Abmessungen der Haltestrukturen durch ein anisotropes, kristallrichtungsabhängiges Vorzugsätzen erreicht wird. Diese Vorteile treten selbstverständlich auch in Verbindung mit dem erfindungsgemäßen Verfahren gemäß Anspruch 11 auf.

Durch die in den Unteransprüchen aufgeführten Maßnahmen sind vorteilhafte Weiterbildungen und Verbesserungen des im Hauptanspruch angegebenen Bauelements sowie des im Anspruch 10 angegebenen Verfahrens möglich.

Bei einer {100} -Oberflächenorientierung des Siliziumsubstrats sind die Kanten des Positioniergrabens entlang der < 110 > -Richtung ausgerichtet, um einen exakten gewünschten Querschnitt des Positioniergrabens zu erreichen.

Die Deckschicht besteht aus Siliziumnitrid, -oxinitrid oder -dioxid und ist zweckmäßigerweise gleichzeitig als Ätzmaske ausgebildet.

Die im Bereich der Unterätzung in Form von den Lichtwellenleiter stützenden, seitlichen Stegen erhaltene Deckschicht reicht zweckmäßigerweise bis an die senkrechte Querschnittsebene der Kopplungsendfläche des Lichtwellenleiters heran, um einen zusätzlichen mechanischen Anschlag zu bilden und dabei die Stoßkopplung zwischen Lichtwellenleiter und Glasfaserkern zu ermöglichen. Dabei sind wenigstens zwei derartige seitliche Stege vorgesehen, die in vorteilhafter Weise dadurch erzeugt werden, daß auch die Ätzmaske mit wenigstens zwei durch Stege von der langgestreckten Maskenausnehmung für den Positioniergraben getrennten Durchbrechungen als zusätzliche Maskenstrukturen versehen wird. Zur Erhöhung der mechanischen Stabilität kann auch eine größere Zahl von seitlichen Stegen vorgesehen sein.

Eine noch bessere mechanische Stabilität ergibt sich dadurch, daß die gesamte, eine Vielzahl von Durchbrüchen aufweisende Deckschicht zu beiden Seiten des Lichtwellenleiters die Stege bildet. Hierzu wird eine Vielzahl von in einem Muster angeordneten Durchbrechungen in die Ätzmaske als zusätzliche Maskenstruktur eingeformt. Die Kanten der Durchbrechungen der Maskenstruktur sind dabei in vorteilhafter Weise wenigstens teilweise unter einem Winkel von wenigstens 45° zur <110 >-Richtung ausgerichtet, um eine schnellere Unterätzung und damit eine exaktere Gestalt des Positioniergrabens zu erreichen. Die Durchbrechungen sind dabei in vorteilhafter Weise nach Art eines Schachbrettmusters ausgerichtet, das zur Achse des Positioniergrabens winkelversetzt angeordnet ist, insbesondere um 45°. Hierdurch wird eine besonders schnelle Unterätzung bei einem möglichst weitgehenden Erhalt der Deckschicht erreicht.

Eine weitere vorteilhafte Maßnahme zur schnelleren Unterätzung besteht darin, den Lichtwellenleiter zur Achse des Positioniergrabens um einen kleinen Winkel versetzt anzuordnen. Dieser sehr kleine Winkel beträgt vorzugsweise einige Grad oder einige 1/10 Grad, sollte jedoch möglichst einen Winkel von 2° nicht übersteigen, da sonst der Lichtübergang zwischen Wellenleiter und Glasfaser problematisch wird. Eine günstige Möglichkeit, dies auszugleichen, besteht darin, daß die Kopplungsfläche zwischen Lichtwellenleiter und Glasfaser mit einer eine Lichtumlenkung um den sehr kleinen Winkel erzeugenden Abschrägung versehen wird.

Zeichnung

Ausführungsbeispiele der Erfindung sind in der Zeichnung dargestellt und in der nachfolgenden Beschreibung näher erläutert. Es zeigen:

Fig. 1    eine Draufsicht auf ein mit einer Ätzmaske versehenes integriert-optisches Bauelement,

Fig. 2    einen Vertikalschnitt durch das in Fig. 1 dargestellte Bauelement zur Erläuterung der Wirkungsweise des anisotropen Ätzvorgangs von Positioniergräben,

Fig. 3    die Draufsicht auf ein integriert-optisches Bauelement als erstes Ausführungsbeispiel der Erfindung,

Fig. 4    die Draufsicht auf ein integriert-optisches Bauelement als zweites Ausführungsbeispiel der Erfindung,

Fig. 5    eine Draufsicht auf ein integriert-optisches Bauelement als drittes Ausführungsbeispiel der Erfindung,

Fig. 6    die Draufsicht auf ein integriert-optisches Bauelement als fünftes Ausführungsbeispiel der Erfindung,

Fig. 7    eine vergrößerte Darstellung eines Ausschnitts aus Fig. 6,

Fig. 8    eine Draufsicht auf ein integriert-optisches Bauelement zur Erläuterung einer Positionierung der Ätzmaske und

Fig. 9    eine Querschnittsdarstellung durch ein integriert-optisches Bauelement zur Erläuterung des Aufbaus an der Oberfläche im Bereich des Lichtwellenleiters.

Beschreibung der Ausführungsbeispiele

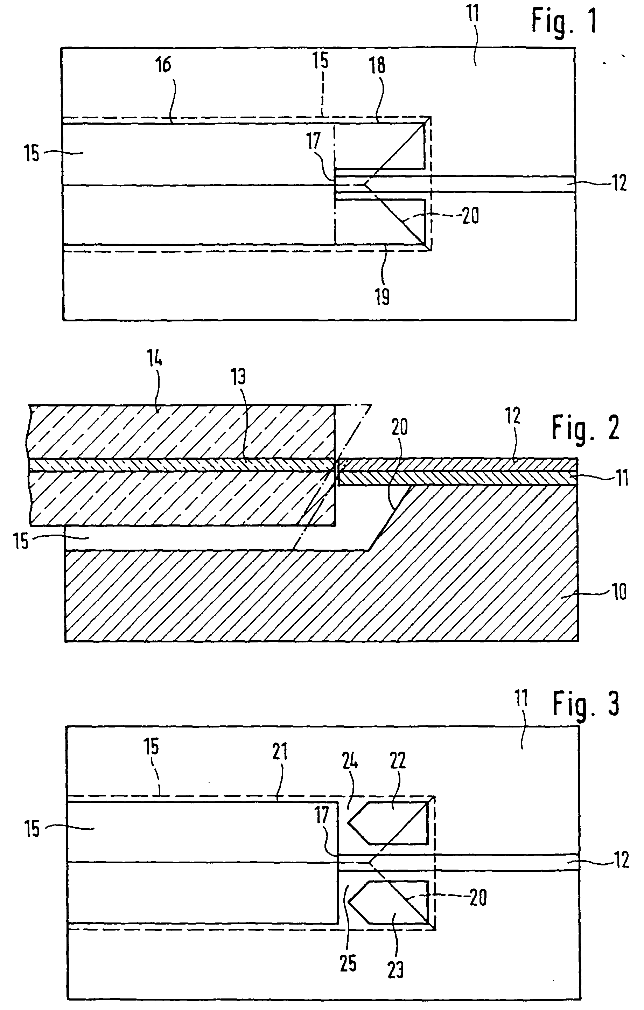

Das in den Fig. 1 und 2 dargestellte integrierte optische Bauelement besteht im wesentlichen aus einem Siliziumsubstrat 10, das im wesentlichen mit einer Deckschicht 11 aus Siliziumnitrid und/oder Siliziumdioxid versehen ist. Diese Deckschicht 10 dient als Pufferschicht für einen integrierten Lichtwellenleiter 12, im folgenden als Wellenleiter 12 bezeichnet. Dieser besteht beispielsweise aus Siliziumoxinitrid, dotiertem Siliziumoxid oder Siliziumnitrid. Dieser Wellenleiter 12 ist mit der elektronischen Schaltungsstruktur des integriertoptischen Bauelements verbunden, was jedoch zur Vereinfachung nicht dargestellt ist, da es für die vorliegende Erfindung von unerheblicher Bedeutung ist. Dieser Wellenleiter 12 wird durch Stoßkopplung an einen Faserkern 13 einer Glasfaser 14 angekoppelt, um Signale nach außen abführen oder von außen zum Bauelement heranführen zu können.

Zur Aufnahme der Glasfaser 14 wird ein Positioniergraben 15 mit V-förmigem Querschnittt in das Siliziumsubstrat 10 anisotrop eingeätzt. Hierzu wird ein Siliziumsubstrat 10 mit einer {100} -Oberflächenorientierung verwendet, und mit Hilfe in einer Deckschicht eingebrachter rechteckförmiger Öffnungen, deren Längskanten entlang der <110> -Richtungen ausgerichtet sind, lassen sich in alkalischen Ätzmedien, wie z. B. Kaliumhydroxid, V-förmige Vertiefungen mit hoher Genauigkeit herstellen. Die so geätzten V-förmigen Positioniergräben 15 werden allseitig von langsam ätzenden {111} -Ebenen begrenzt, die einen Winkel von 54,7° zur Oberfläche einschließen. Die Querschnittsgestalt des Positioniergrabens läßt sich also durch die Breite dieser Ätzöffnungen sehr exakt einstellen und demzufolge auch die Höhenposition der Glasfaser 14, die auf diesen schrägen Ebenen aufliegt.

Gemäß den Fig. 1 und 2 wird die Deckschicht 11 selbst als Ätzmaske verwendet, das heißt, in diese Deckschicht 11 wird eine Maskenöffnung bzw. Maskendurchbrechung 16 eingeformt.

Diese Maskendurchbrechung kann durch die Fotolithographieprozeß und anschließendes Trockenätzen erzeugt werden. Selbstverständlich ist es prinzipiell auch möglich, eine separate Ätzmaske aufzulegen.

Die in den Fig. 1 und 2 verwendete Maskendurchbrechung 16 ist im wesentlichen als langgestrecktes Rechteck ausgebildet, das sich bis zur freien Koppelendfläche 17 des Wellenleiters 12 erstreckt, wobei zwei rechteckige Maskendurchbrechungen 18,19 in Verlängerung der Maskendurchbrechung 16 seitlich des freien Endbereichs des Wellenleiters 12 angeordnet sind. Hierdurch wird gemäß Fig. 2 der Endbereich des Wellenleiters 12 derart unterätzt, daß die unter einem Winkel von ebenfalls 54,7° geneigte Endfläche 20 des Positioniergrabens 15 vollkommen unterhalb des Wellenleiters 12 liegt. Die Glasfaser 14 kann daher nach erfolgtem Ätzprozeß in den Positioniergraben 15 eingelegt und zur Koppelendfläche 17 des Wellenleiters 12 hingeschoben und dann verklebt werden. Die horizontale Lage des Faserkerns 14 entspricht bei korrekt gewählter Breite der Maskendurchbrechung 16 exakt der horizontalen Position des Wellenleiters 12, so daß eine ideale Stoßkopplung zustande kommt. Allerdings ist die durch Unterätzung gebildete, aus dem Endbereich des Wellenleiters 12 und der darunter verbliebenen Deckschicht 11 bestehende frei schwebende Zunge so dünn und instabil, daß dieses Verfahren im allgemeinen für den praktischen Einsatz nicht in Frage kommt.

Sofern die Maskendurchbrechung 16 nur bis zur Ebene der Koppelendfläche 17 des Wellenleiters 12 gemäß dem eingangs angegebenen Stand der Technik heranreichen würde, was durch eine strichpunktierte Linie in Fig. 1 angedeutet ist, so würde eine geneigte Endfläche des Positioniergrabens 15 entstehen, wie sie in Fig. 2 ebenfalls durch eine strichpunktierte Linie angedeutet ist. In diesem Falle müßte sowohl die Endfläche der Glasfaser 14 als auch die Koppelendfläche 17 des Lichtwellenleiters 12 entsprechend abgeschrägt werden, um eine ausreichende Kopplung zu erzeugen. Die Nachteile dieses bekannten Verfahrens wurden im Zusammenhang mit dem eingangs genannten Stand der Technik bereits ausführlich erläutert.

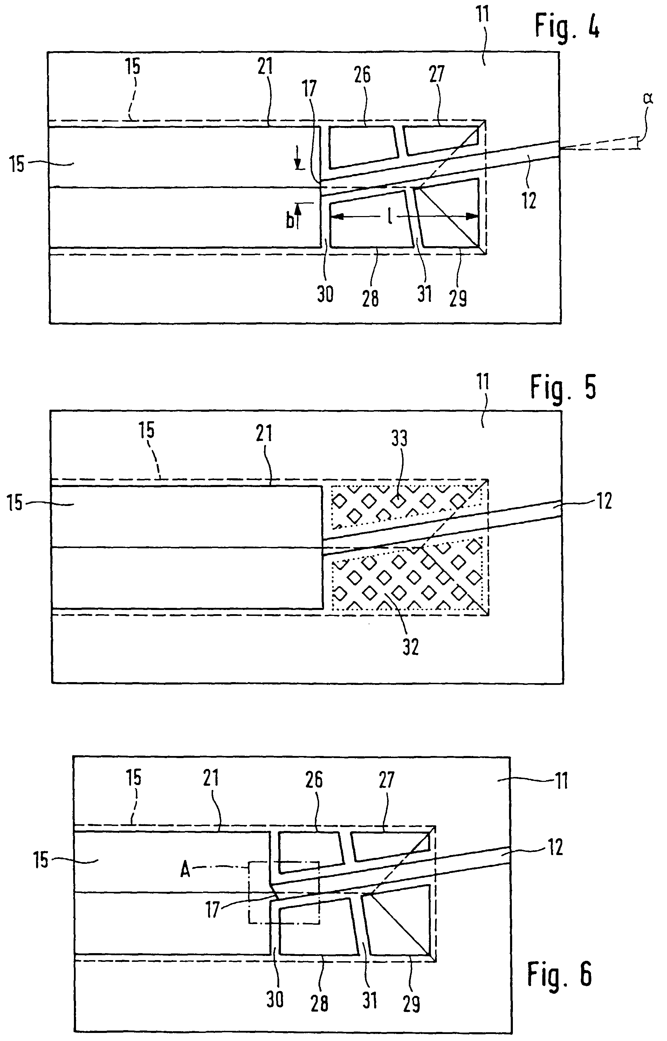

Um sowohl eine Unterätzung des Endbereichs des Lichtwellenleiters 12 als auch eine ausreichende Stabilität dieses Endbereichs zu erreichen, wird gemäß Fig. 3 eine Maskenstruktur verwendet, die eine erste, langgestreckte rechteckige Maskendurchbrechung 21 aufweist, die bis an die Koppelendfläche 17 des Wellenleiters 12 heranreicht und mit diesem fluchtet, während zusätzlich zwei separate Maskendurchbrechungen 22,23 in Verlängerung der Maskendurchbrechung 21 zu beiden Seiten des Endbereichs des Wellenleiters 12 angeordnet sind. Diese Maskendurchbrechungen 22,23 sind im wesentlichen rechteckförmig ausgebildet, weisen jedoch eine keilförmige, zur Maskendurchbrechung 21 hin weisende Erweiterung auf. Durch die schrägen Kanten dieser Maskendurchbrechungen 22,23 ergibt sich daher an dieser Stelle eine hohe Endgeschwindigkeit, die es ermöglicht, daß relativ breite Stege 24,25 der Oxid-Deckschicht 11 zwischen den Maskendurchbrechungen 22,23 einerseits und der Maskendurchbrechung 21 andererseits bestehen bleiben können, die als Aufhängung und Stabilisierung des Endbereichs des Wellenleiters 12 dienen. Dabei wird eine vollständige Unterätzung dieser Stege 24,25 erreicht, die ein exaktes Heranschieben der Glasfaser 14 an die Koppelendfläche 17 ermöglicht.

In einigen Anwendungsfällen, wie z.B. bei streifenbelasteten Wellenleitern mit großen transversalen Feldausbreitungen, muß die unter dem Endbereich des Wellenleiters 12 verbleibende Oxidzunge ebenfalls eine möglichst große Breite aufweisen. In solchen Fällen würde die Unterätzung des Wellenleiters von der Seite her, die zudem erst nach der vollständigen Unterätzung der Querstege einsetzt, eine relativ lange Ätzdauer dauer benötigen. Bei dem in Fig. 4 dargestellten Ausführungsbeispiel wird eine Erhöhung der Endgeschwindigkeit zur Unterätzung dieser Oxidzunge dadurch erreicht, daß die Längsachse des Wellenleiters 12 um einen kleinen Winkel $\alpha$ zur Längsachse des Positioniergrabens 15 versetzt ist. Die laterale Unterätzrate der aus Oxid bestehenden Ätzmaske ist in hohem Maße von der relativen Justierung der Kanten der Maskendurchbrechungen zu den <110 >-Kristallrichtungen abhängig. Maximale Anisotropie, das heißt minimale laterale Unterätzrate, ergibt sich nur, wenn die Kanten exakt entlang dieser Kristallrichtungen orientiert sind. Für die Außenkanten des V-förmigen Positioniergrabens 15 ist aus Gründen einer guten Reproduzierbarkeit eine minimale Unterätzrate wünschenswert. Diese zeigt sich in den Figuren beispielsweise durch Differenz der seitlichen Längskanten der langgestreckten Maskendurchbrechung für den Positioniergraben 15 und dessen gestrichelt dargestellten Außenkanten. Der Endbereich des Wellenleiters 12 und die diesen tragenden seitlichen Stege sollen jedoch mit hoher Rate lateral unterätzt werden. Eine Winkelabweichung von $\alpha = 2°$ führt beispielsweise bereits zu einer etwa zehnmal höheren lateralen Unterätzrate. Gemäß Fig. 4 wird daher die Oxidzunge von beiden Seiten so lange mit hoher Geschwindigkeit unterätzt, bis die Ätzfront wieder durch eine {111}-Ebene gebildet wird. Der Winkel $\alpha$ muß daher so dimensioniert sein, daß die Ätzfronten beider Seiten zusammentreffen, bevor die {111 } -Ebenen ausgebildet werden. Ist b die Breite und 1 die Länge der zu unterätzenden Oxidzunge, so ist $\alpha$ gegeben durch:

$$\tan \alpha = b/l$$

Zu beachten ist, daß infolge der seitlichen Unterätzung auch die Unterätzung von der Koppelendfläche 17 her mit wesentlich höherer Geschwindigkeit abläuft, da schmale Strukturen schneller geätzt werden. Dier Quotient b/l ist somit nur ein oberer Grenzwert für tan $\alpha$, der tatsächliche Winkel kann deutlich kleiner sein.

Bei dem in Fig. 4 dargestellten Ausführungsbeispiel sind als zusätzliche Maskenstruktur vier Maskendurchbrechungen 26-29 seitlich des Endbereichs des Wellenleiters 12 angeordnet, um zwei seitliche Paare von Stegen 30,31 zu erhalten. Die Maskendurchbrechungen 26-29 entsprechen in ihrer Außenkontur im wesentlichen der der Maskendurchbrechungen 18,19 bzw. 20,23, jedoch verlaufen ihre zum Wellenleiter 12 hin weisenden Kanten entsprechend dessen Anordnung schräg. Das gleiche trifft für das mittlere Paar von Stegen 31 zu.

Um die Stabilität der Aufhängung des Endbereichs des Wellenleiters 12 noch weiter zu erhöhen, wird gemäß Fig. 5 der Endbereich des Wellenleiters 12 nicht nur durch einzelne Stege, sondern durch eine strukturierte Membran 32 mit der Deckschicht 11 außerhalb des Positioniergrabens 15 verbunden. Die Struktur auf der Membran 32 ist im wesentlichen als Schachbrettmuster ausgebildet, das um 45° gegen die Längsachse des Positioniergrabens 15 gedreht ist. Die Kanten der quadratischen Durchbrechungen 33 dieser Membran liegen somit parallel zu den <100> -Kristallrichtungen. Für diese Kanten ist daher die laterale Unterätzrate so hoch wie die vertikale Ätzrate, so daß die Membran besonders schnell unterätzt wird. Es bleibt daher seitlich des Wellenleiters 12 nahezu die gesamte Deckschicht 11 erhalten, welche lediglich die quadratischen Durchbrechungen 33 aufweist. Selbstverständlich kann die Gestalt dieser Durchbrechungen 33 auch in vielfältiger Weise variieren. Wesentlich dabei ist es, daß entsprechende schräge Kanten vorliegen, um eine schnelle Unterätzung dieser Membran 32 zu erreichen.

Der Wellenleiter 12 ist bei diesem Ausführungsbeispiel wiederum um einen kleinen Winkel zur Längsachse des Positioniergrabens 15 gedreht. Selbstverständlich sind die quadratischen Durchbrechungen 33 gemäß diesem Ausführungsbeispiel oder die Maskendurchbrechungen 26-29 gemäß dem in Fig. 4 dargestellten Ausführungsbeispiel auch in Verbindung mit einem Wellenleiter möglich, der exakt fluchtend zur Längsachse des Positioniergrabens 15 angeordnet ist.

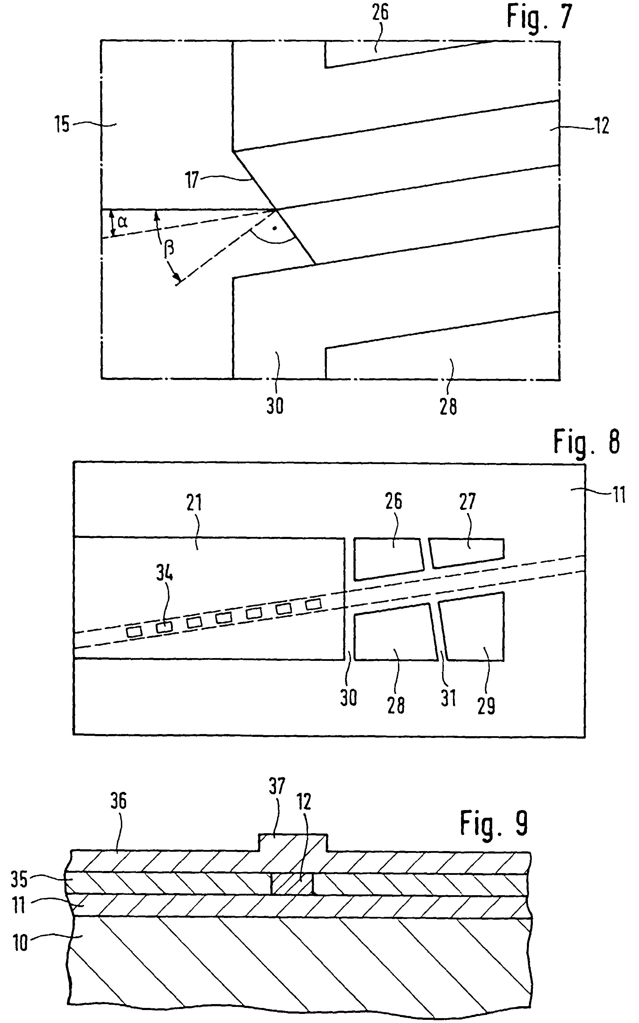

Das in Fig. 6 dargestellte Ausführungsbeispiel entspricht weitgehend dem in Fig. 4 dargestellten Ausführungsbeispiel, so daß - wie auch bei den anderen Ausführungsbeispielen - gleiche oder gleichwirkende Bauteile oder Gegenstände mit denselben Bezugszeichen versehen und nicht nochmals beschrieben sind. Der in Fig. 6 gekennzeichnete Ausschnitt A ist in Fig. 7 zur besseren Erläuterung vergrößert wiedergegeben.

Durch die Drehung des Wellenleiters 12 um den kleinen Winkel $\alpha$ gegenüber der Längsachse des Positioniergrabens 15 würde die dadurch bedingte Winkelverkippung zwischen den optischen Achsen der Glasfaser 14 und des Wellenleiters 12 zu einer Abnahme des Koppelwirkungsgrades führen. Um dies zu verhindern, wird gemäß dem in den Fig. 6 und 7 dargestellten Ausführungsbeispiel zusätzlich die Koppelendfläche 17 gegen die Endfläche der Glasfaser 14 gedreht, so daß ihre Flächennormale einen Winkel $\beta$ mit der Faserachse einschließt. Erfüllen $\alpha$ und $\beta$ die Bedingung

$$\tan \beta = \frac{n \cdot \sin \alpha}{n \cdot \cos \alpha - n_0}$$

wobei $n_0$ der Brechungsindex des äußeren Mediums (üblicherweise $n_0 = 1$ für Luft) und n der Brechungsindex des Wellenleiters ist, dann wird das aus der Faser austretende Licht trotz einer Drehung des Wellenleiters um den Winkel $\alpha$ an der Koppelendfläche so gebrochen, daß er sich im Wellenleiter wieder parallel zu dessen Achse ausbreitet. Diese zusätzliche Drehung der Koppelendfläche 17 kann selbstverständlich auch bei anderen Ausführungsbeispielen eingesetzt werden, bei denen eine Drehung des Wellenleiters 12 zur Längsachse der Glasfaser 14 vorliegt.

Aus technologischen Gründen bietet es sich an, den Positioniergraben 15 bzw. die Vielzahl der Positioniergräben für eine Vielzahl von Glasfasern eines Glasfaserstrangs erst nach Fertigstellung des integrierten Lichtwellenleiters zu ätzen. Es ist daher notwendig, die Ätzmaske mit den Strukturen für den anisotropen naßchemischen Ätzprozeß sowohl relativ zur Kristallrichtung (Winkellage) als auch relativ zur Koppelendfläche (laterale Lage) auszurichten. Die Ätzmaske trägt daher gemäß Fig. 8 eine Justierstruktur, die entweder am Waferflat oder an einer zur Markierung der Kristallrichtung vorgeätzten Struktur ausgerichtet wird. Insbesondere werden im Bereich des Positioniergrabens 15 für die Gl asfaser Justierstrukturen 34 angebracht, die die Form einer unterbrochenen Linie aufweisen, deren Breite etwas kleiner als die Breite des Wellenleiters 12 ist. Die Achse dieser Justierstruktur 34 ist ebenfalls um den kleinen Winkel $\alpha$ gegen die Faserachse gedreht. Da alle Strukturen der Ätzmaske im gleichen Lithographiprozeß hergestellt werden, ist ihre relative Lage genau definiert. Nach Festlegung der Winkellage relativ zur Kristallrichtung wird nun die Maske parallel zur <110 >-Richtung so lange verschoben, bis die unterbrochene Justierstruktur mit dem Wellenleiter zur Deckung gelangt. Damit ist auch die laterale Lage von Glasfaser und integriertem Wellenleiter definiert. Bei einem Faser- und Wellenleiter-Array genügt es, diesen Justierprozeß anhand einer einzigen Struktur durchzuführen. Alle anderen Strukturen des Arrays sind dann ebenfalls ausgerichtet.

In den beschriebenen Ausführungsbeispielen war das Siliziumsubstrat 10 mit einer Deckschicht 11 versehen, auf der der Wellenleitere 12 verläuft. Diese Darstellung wurde zur Vereinfachung gewählt. Fig. 9 zeigt eine detailliertere Darstellung, die die Anordnung bei einer praktischen Ausführung zeigt. Der Wellenleiter 12 ist hier in einer weiteren Schicht 35 eingebettet, die beispielsweise aus SiON besteht und die über der Deckschicht 11 angeordnet ist. Über dieser Schicht 35 befindet sich noch eine Deckschicht 36 aus Siliziumoxid, die über dem Wellenleiter 12 eine leistenartige Erhebung 37 besitzt, die den Verlauf des Wellenleiters 12 kenntlich macht. Alternativ hierzu könnten die Schichten 35, 36 auch als einzige Schicht ausgebildet sein.

**Patentansprüche**

1. Integriertes optisches Bauelement, mit einem integrierten, auf einem mit wenigstens einer Deckschicht versehenen Siliciumsubstrat angeordneten Lichtwellenleiter, dessen Kopplungsendfläche an einem anisotrop in das Substrat eingeätzten Positioniergraben mit V-förmigem Querschnitt zur Aufnahme einer durch Stoßkopplung an die Kopplungsendfläche des Lichtwellenleiters anzukoppelnden Glasfaser mündet, wobei die Deckschicht unterhalb des mit der Kopplungsendfläche versehenen Endbereiches des Lichtwellenleiters unterätzt ist, und der Positioniergraben bis zur Kopplungsendfläche einen gleichbleibenden Querschnitt aufweist, dadurch gekennzeichnet, daß in der Deckschicht (11) jeweils seitlich neben dem Endbereich des Lichtwellenleiters (12) eine Durchbrechung (22, 23, 26 - 29, 33) angeordnet ist, die in Fortsetzung des Positioniergrabens (15) in den unterätzten Bereich unterhalb der Deckschicht (11) mündet und so einen aus der Deckschicht (11) herausgebildeten Steg (24, 25) definiert, welcher einen Oberrand des Positioniergrabens (15) mit dem gegenüberliegendem Rand verbindet und über dem unterätzten Bereich unterhalb der Deckschicht (11) verläuft.

2. Bauelement nach Anspruch 1, dadurch gekennzeichnet, daß das Siliziumsubstrat (10) eine {100} -Oberflächenorientierung aufweist, und daß die Kanten des Positioniergrabens (15) entlang der <110 >-Richtung ausgerichtet sind.

3. Bauelement nach Anspruch 1 oder 2, dadurch gekennzeichnet, daß die Deckschicht (11) aus Siliziumnitrid oder -dioxid besteht.

4. Bauelement nach einem der vorhergehenden Ansprüche, dadurch gekennzeichnet, daß die Deckschicht (11) als Ätzmaske ausgebildet ist.

5. Bauelement nach einem der vorhergehenden Ansprüche, dadurch gekennzeichnet, daß die Flächen des V-förmigen Positioniergrabens (15) zur Deckschichtfläche einen Winkel von 54,7° einschließen.

6. Bauelement nach einem der vorhergehenden Ansprüche, dadurch gekennzeichnet, daß wenigstens zwei seitliche Stege (24,25; 30; 32) bis an die senkrechte Querschnittsebene des Lichtwellenleiters (12) im Bereich der Kopplungsendfläche (17) heranreichen, wobei die Deckschicht (11) zu beiden Seiten des Lichtwellenleiters (12) wenigstens zwei von der Öffnung für den Positioniergraben (15) getrennte Durchbrechungen (22,23; 26-29; 33) aufweist.

7. Bauelement nach Anspruch 6, dadurch gekennzeichnet, daß die gesamte, eine Vielzahl von Durchbrechungen (33) aufweisende Deckschicht (11) zu beiden Seiten des Lichtwellenleiters (12) die Stege bildet.

8. Bauelement nach Anspruch 7, dadurch gekennzeichnet, daß die Durchbrechungen (33) nach Art eines Schachbrettmusters ausgerichtet sind, das zur Achse des Positioniergrabens (15) winkelversetzt angeordnet ist, insbesondere um 45°.

9. Bauelement nach einem der vorhergehenden Ansprüche, dadurch gekennzeichnet, daß der Lichtwellenleiter (12) zur Achse des Positioniergrabens (15) um einen kleinen Winkel ($\alpha$) versetzt angeordnet ist.

10. Bauelement nach Anspruch 9, dadurch gekennzeichnet, daß der kleine Winkel kleiner als 2° ist.

11. Verfahren zur Herstellung eines integriert optischen Bauelementes, das einen integrierten, auf einem mit wenigstens einer Deckschicht versehenen Siliciumsubstrat angeordneten Lichtwellenleiter aufweist, wobei zur Aufnahme einer an den Lichtwellenleiter anzukoppelnden Glasfaser ein Positioniergraben mit V-förmigem Querschnitt mittels einer eine langgestreckte Maskendurchbrechung aufweisenden Ätzmaske in das Siliciumsubstrat anisotrop eingeätzt wird, wobei die Ätzmaske so auf das Bauelement aufgebracht wird, daß die Maskendurchbrechung bis an den freien, an die Glasfaser anzukoppelnden Endbereich des Lichtwellenleiters reicht,
dadurch gekennzeichnet, daß

- in der Ätzmaske seitlich entlang des Endbereiches des Lichtwellenleiters (12) jeweils mindestens eine zusätzliche Maskendurchbrechung (22,23;26-29;33) angelegt wird,
- durch einen sich anschließenden Ätzprozeß der Positioniergraben (15) sowie Unterätzungen entsprechend den zusätzlichen Maskendurchbrechungen (22,23;26-29;33) in das Substrat (10) eingeätzt werden, wobei sich die von der Maskendurchbrechung (21) herrührende Unterätzung zur Erzeugung des Positioniergrabens (15) mit den von den Maskendurchbrechungen (22,23;26-29;33) herrührenden Unterätzungen unterhalb der Deckschicht (11) vereint, so daß sich aus der Deckschicht (11) ein Steg (24, 25; 30, 31) herausbildet, der einen Rand des Positioniergrabens (15) mit dem gegenüberliegenden Rand verbindet und über dem unterätzten Bereich unterhalb der Deckschicht (11)verläuft.

12. Verfahren nach Anspruch 11, dadurch gekennzeichnet, daß bei einer {100}-Oberflächenorientierung des Siliziumsubstrats (10) die Längsachse der Ätzmaske (11) in der <110>-Richtung ausgerichtet wird, wobei die Breite der Maskendurchbrechung (21) so gewählt wird, daß der Faserkern (13) der an den sich ergebenenden {111}-Ebenen des Positioniergrabens (15) anliegenden Glasfaser (14) in der Ebene des Lichtwellenleiters (12) zu liegen kommt.

13. Verfahren nach Anspruch 11, dadurch gekennzeichnet, daß eine Ätzmaske mit einer Maskenstruktur (32) verwendet wird, welche eine Vielzahl von zusätzlichen, in einem Muster angeordneten Maskendurchbrechungen (33) aufweist.

14. Verfahren nach Anspruch 12 oder 13, dadurch gekennzeichnet, daß die nicht entlang des Randbereichs des Positioniergrabens (15) angeordneten Durchbrechungen (33) der Maskenstruktur (32) wenigstens teilweise unter einem Winkel von im wesentlichen 45° zur <110>-Richtung ausgerichtet werden.

15. Verfahren nach einem der Ansprüche 11 bis 14, dadurch gekennzeichnet, daß ein sehr kleiner Winkel (α) von einigen Grad oder einigen 1/10 Grad zwischen den Längsachsen der langgestreckten Maskendurchbrechung (21) und des Lichwellenleiters (12) eingestellt wird.

16. Verfahren nach einem der Ansprüche 11 bis 15, dadurch gekennzeichnet, daß die Kopplungsfläche (17) zwischen Lichtwellenleiter (12) und Glasfaser (14) mit einer eine Lichtumlenkung um den sehr kleinen Winkel (α) erzeugenden Abschrägung versehen wird.

17. Verfahren nach einem der Ansprüche 11 bis 16, dadurch gekennzeichnet, daß der Positioniergraben (15) erst nach Fertigstellung der Integrationsstrukturen geätzt wird.

18. Verfahren nach einem der Ansprüche 11 bis 17, dadurch gekennzeichnet, daß zur Positionierung der Ätzmaske auf dem Bauelement Justrierstrukturen (34) aufgebracht werden.

19. Verfahren nach einem der Ansprüche 11 bis 18, dadurch gekennzeichnet, daß die Deckschicht auf dem Siliziumsubstrat (10) als Ätzmaske (11) verwendet wird.

**Claims**

1. Integrated optical component, having an integrated optical waveguide which is arranged on a silicon substrate provided with at least one cover layer and whose coupling end-face terminates at a positioning trench, with V-shaped cross-section, etched anisotropically into the substrate for receiving a glass fibre to be coupled to the coupling end-face of the optical waveguide by butt-coupling, the cover layer being undercut-etched below the optical waveguide end region provided with the coupling end-face and the positioning trench having a constant cross-section as far as the coupling end-face, characterized in that one hole (22, 23, 26 - 29, 33) is arranged in the cover layer (11), on each side next to the end region of the optical waveguide (12), which hole opens in continuation of the positioning trench (15) into the undercut-etched region below the cover layer (11) and thus defines a segment (24, 25), formed from the cover layer (11), which connects one upper edge of the positioning trench (15) to the opposite edge and extends over the undercut-etched region below the cover layer (11).

2. Component according to Claim 1, characterized in that the silicon substrate (10) has a {100} surface orientation, and in that the edges of the positioning trench (15) are aligned along the <110> direction.

3. Component according to Claim 1 or 2, characterized in that the cover layer (11) consists of silicon nitride or silicon dioxide.

4. Component according to one of the preceding claims, characterized in that the cover layer (11) is designed as an etching mask.

5. Component according to one of the preceding claims, characterized in that the faces of the V-shaped positioning trench (15) form an angle of 54.7° with respect to the cover-layer face.

6. Component according to one of the preceding claims, characterized in that at least two lateral segments (24,25; 30; 32) extend as far as the vertical cross-sectional plane of the optical waveguide (12) in the region of the coupling end-face (17), the cover layer (11) having, on both sides of the optical waveguide (12), at least two holes (22,23; 26-29; 33) separated from the opening for the positioning trench (15).

7. Component according to Claim 6, characterized in that the entire cover layer (11), having a multiplicity of holes (33), forms the segments on both sides of the optical waveguide (12).

8. Component according to Claim 7, characterized in that the holes (33) are aligned in the manner of a checker board which is arranged angularly offset, in particular by 45°, with respect to the axis of the positioning trench (15).

9. Component according to one of the preceding claims, characterized in that the optical waveguide (12) is arranged offset by a small angle (α) with respect to the axis of the positioning trench (15).

10. Component according to Claim 9, characterized in that the small angle is less than 2°.

11. Process for the production of an integrated optical component which has an integrated optical waveguide arranged on a silicon substrate provided with at least one cover layer, a positioning trench with V-shaped cross-section being anisotropically etched into the silicon substrate using an etching mask having an elongate mask hole in order to receive a glass fibre to be coupled to the optical waveguide, the etching mask being applied to the component in such a way that the mask hole extends as far as the free optical-waveguide end region to be coupled to the glass fibre, characterized in that

   - at least one additional mask hole (22,23;26-29; 33) is arranged in the etching mask, along each side of the end region of the optical waveguide (12),
   - using a subsequent etching process, the positioning trench (15) as well as undercut etches, in accordance with the additional mask holes (22,23;26-29;33) are etched into the substrate (10), the undercut etch which originates from the mask hole (21) and is for producing the positioning trench (15), joining with the undercut etches below the cover layer (11) which originate from the mask holes (22,23;26-29;33), so as to form, from the cover layer (11), a segment (24, 25; 30, 31) which connects one edge of the positioning trench (15) to the opposite edge and extends over the undercut-etched region below the cover layer (11).

12. Process according to Claim 11, characterized in that, in the case of a {100} surface orientation of the silicon substrate (10), the longitudinal axis of the etching mask (11) is aligned in the <110> direction, the width of the mask hole (21) being selected in such a way that the fibre core (13) of the glass fibre (14) fitted to the resulting {111} planes of the positioning trench (15) comes to lie in the plane of the optical waveguide (12).

13. Process according to Claim 11, characterized in that use is made of an etching mask with a mask structure (32) which has a multiplicity of additional mask holes (33) arranged in a pattern.

14. Process according to Claim 12, characterized in that at least some of the holes (33) of the mask structure (32) which are not arranged along the edge region of the positioning trench (15) are aligned at an angle of essentially 45° with respect to the <110> direction.

15. Process according to one of Claims 11 to 13, characterized in that a very small angle (α) of a few degrees or a few tenths of a degree is set between the longitudinal axes of the elongate mask hole (21) and of the optical waveguide (12).

16. Process according to one of Claims 11 to 14, characterized in that the coupling face (17) between the optical waveguide (12) and the glass fibre (14) is provided with a bevel which deviates light by the very small angle (α).

17. Process according to one of Claims 11 to 15, characterized in that the positioning trench (15) is not etched until after the integration structures have been fabricated.

18. Process according to one of Claims 11 to 16, characterized in that alignment structures (34) are applied to position the etching mask on the component.

19. Process according to one of Claims 11 to 17, characterized in that the cover layer on the silicon substrate (10) is used as the etching mask (11).

**Revendications**

1. Composant optique intégré comprenant un guide d'ondes lumineuses intégré, prévu sur un substrat de silicium muni au moins d'une couche de recouvrement et dont la surface d'extrémité de couplage débouche dans un sillon de positionnement corrodé de manière anisotrope dans le substrat, en ayant une section en forme de V pour recevoir une fibre de verre à coupler bout à bout à la surface d'extrémité de couplage du guide d'ondes, la couche de recouvrement étant corrodée en contre-dépouille en dessous de la zone d'extrémité du guide d'ondes, avec sa surface d'extrémité de couplage, et le sillon de positionnement présente une section constante jusqu'au niveau de la surface d'extrémité de couplage, caractérisé en ce que dans la couche de recouvrement (11), de chaque côté de la zone d'extrémité du guide d'ondes (12), il y a une ouverture (22, 23, 26-29, 33) qui débouche dans le prolongement du sillon de positionnement (15) dans la zone corrodée en contre-dépouille en dessous de la couche de recouvrement (11), et définit ainsi une branche (24, 25) dégagée de la couche de recouvrement (11), qui relie un bord supérieur du sillon de positionnement (15) aux bords opposés et passe sous la couche de recouvrement (11) au-dessus de la zone corrodée en contre-dépouille.

2. Composant selon la revendication 1,
caractérisé en ce que
le substrat de silicium (10) présente une orientation de surface {100} et les arêtes du sillon de positionnement (15) sont alignées suivant la direction cristallographique en biais <110>.

3. Composant selon la revendication 1 ou 2,
caractérisé en ce que
la couche de recouvrement (11) est en nitrure ou en dioxyde de silicium.

4. Composant selon l'une des revendications précédentes,
caractérisé en ce que
la couche de recouvrement (11) est un masque de corrosion.

5. Composant selon l'une quelconque des revendications précédentes,
caractérisé en ce que
les surfaces du sillon de positionnement (15) à section en forme de V font un angle de 54,7° par rapport à la surface de recouvrement.

6. Composant selon l'une des revendications précédentes,
caractérisé en ce que
au moins deux branches latérales (24, 25 ; 30 ; 32) arrivent jusqu'au niveau du plan de coupe transversal perpendiculaire du guide d'ondes (12) au niveau de la surface d'extrémité de couplage (17), la couche de recouvrement (11) ayant des deux côtés du guide d'ondes (12) au moins deux passages (22, 23 ; 26-29 ; 33) séparés de l'ouverture du sillon de positionnement (15).

7. Composant selon la revendication 6,
caractérisé en ce que
l'ensemble de la couche de recouvrement (11) comportant un grand nombre d'ouvertures (33), forme les branches des deux côtés du guide de lumière (12).

8. Composant selon la revendication 7,
caractérisé en ce que
les ouvertures (33) sont réalisées à la manière d'un damier incliné par rapport à l'axe du sillon de positionnement (15), notamment de 45°.

9. Composant selon l'une des revendications précédentes,
caractérisé en ce que
le guide d'ondes (12) est décalé d'un petit angle ($\alpha$) par rapport au sillon de positionnement (15).

10. Composant selon la revendication 9,
caractérisé en ce que
le petit angle est inférieur à 2°

11. Procédé de fabrication d'un composant optique intégré comprenant un guide d'ondes lumineuses intégré, prévu sur un substrat de silicium muni d'au moins une couche de revêtement et d'un sillon de positionnement à section en forme de V pour recevoir une fibre de verre à coupler au guide d'ondes, et corrodée de manière anisotrope à l'aide d'un masque de corrosion, dans le substrat de silicium, masque muni d'une ouverture allongée, le masque de corrosion étant appliqué sur le composant pour que l'ouverture du masque arrive jusqu'à l'extrémité libre du guide d'ondes à coupler à la fibre de verre,
caractérisé en ce que
on réalise dans le masque de corrosion, latéralement le long de la zone d'extrémité du guide d'ondes (12), chaque fois au moins une ouverture de masque supplémentaire (22, 23 ; 26-29 ; 33),

- puis par un procédé de corrosion, on réalise le sillon de positionnement (15) ainsi que les corrosions en contre-dépouille correspondant aux ouvertures de masque supplémentaires (22, 23 ; 26-29, 33), dans le substrat (10), la corrosion en contre-dépouille provenant de l'ouverture (21) du masque étant réunie aux corrosions provenant des ouvertures (22, 23 ; 26-29 ; 33) pour former le sillon de positionnement (15) en dessous de la couche de revêtement (11), de façon à former une branche (24, 25 ; 30, 31) dans la couche de revêtement (11), branche qui relie un bord du sillon de positionnement (15) au bord opposé et passe par-dessus la zone de corrosion en contre-dépouille en dessous de la couche de recouvrement (11).

12. Procédé selon la revendication 11,
caractérisé en ce que
pour une orientation de surface {100} du substrat de silicium (10), l'axe longitudinal du masque de corrosion (11) est aligné dans la direction <110>, la largeur de l'ouverture (21) du masque étant choisie pour que le coeur (13) de la fibre de verre (14) appliquée contre les plans d'orientation {111} du sillon de positionnement (15), vienne dans le plan du guide d'ondes (12).

**13.** Procédé selon la revendication 11,
caractérisé en ce que
on utilise un masque de corrosion ayant une structure (32) comportant un grand nombre d'ouvertures (33) complémentaires réparties suivant un modèle.

**14.** Procédé selon la revendication 12,
caractérisé en ce que
les ouvertures (33) de la structure de masque (32) qui ne sont pas prévues le long de la zone du bord du sillon de positionnement (15), sont au moins partiellement alignées suivant un angle essentiellement de 45° par rapport à la direction cristallographique <110>.

**15.** Procédé selon l'une des revendications 11 à 14,
caractérisé en ce que
on règle un angle très petit ($\alpha$) de quelques degrés ou quelques dixièmes de degré entre l'axe longitudinal de l'ouverture de masque (21) allongée, et le guide d'ondes (12).

**16.** Procédé selon l'une des revendications 11 à 15,
caractérisé en ce que la surface de couplage (17) entre le guide d'ondes (12) et la fibre de verre (14) se fait avec une inclinaison générant une déviation de lumière d'un angle très petit ($\alpha$).

**17.** Procédé selon l'une des revendications 11 à 16,
caractérisé en ce que
le sillon de positionnement (15) n'est réalisé qu'après la fin de la fabrication des structures d'intégration.

**18.** Procédé selon l'une des revendications 11 à 17,
caractérisé en ce que
les structures d'ajustage (34) sont prévues sur le composant pour positionner le masque de corrosion.

**19.** Procédé selon l'une des revendications 11 à 18,
caractérisé en ce que
la couche de recouvrement du substrat de silicium (10) est utilisée comme masque de corrosion (11).

Fig. 1

Fig. 2

Fig. 3

Fig. 4

Fig. 5

Fig. 6

Fig. 7

Fig. 8

Fig. 9